Europäisches Patentamt

European Patent Office

Office européen des brevets

(19)

(11) EP 1 565 023 A2

(12) **EUROPEAN PATENT APPLICATION**

(43) Date of publication:
17.08.2005 Bulletin 2005/33

(51) Int Cl.⁷: **H04Q 7/38**, H04L 1/18

(21) Application number: 05003074.1

(22) Date of filing: 14.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 14.02.2004 KR 2004009875

(71) Applicant: **Samsung Electronics Co., Ltd.**
**Suwon-city, Gyeonggi-do (KR)**

(72) Inventors:
• **Shin, Kyo-Sook, Samsung Electronics Co., Ltd.**
**Suwon-si, Gyeonggi-do (KR)**

• **Ryu, Joon-Sang, Samsung Electronics Co., Ltd.**
**Suwon-si, Gyeonggi-do (KR)**
• **Choi, Kyu-Hyon, Samsung Electronics Co., Ltd.**
**Suwon-si, Gyeonggi-do (KR)**
• **Kim, Hun-Kee, Samsung Electronics Co., Ltd.**
**Suwon-si, Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Method for performing compressed mode-based HARQ in a mobile communication system supporting HSDPA**

(57) A method for preventing a transmission delay of data packets transmitted through an uplink due to a transmission gap (TG) period occurring when a user equipment (UE) performs handover from a Node B to its neighbor Node B in a mobile communication system. In the method, the Node B sequentially transmits data packets to the UE through a plurality of subframes, and the UE transmits response signals for the data packets transmission-delayed for the TG period to the Node B through a subframe of an uplink dedicated physical control channel (DPCCH), following the TG period.

FIG.2

**Description**

BACKGROUND OF THE INVENTION

Field of the Invention:

The present invention relates generally to a mobile communication system supporting High Speed Downlink Packet Access (HSDPA). In particular, the present invention relates to a method for minimizing a data transmission delay of Hybrid Automatic Repeat re-Quest (HARQ) in an uplink compressed mode.

Description of the Related Art:

In general, HSDPA refers to a scheme for supporting high speed downlink packet data transmission in a Universal Mobile Telecommunication System (UMTS) communication system, a next generation asynchronous communication system, and supports a high speed downlink shared channel (HS-DSCH), a shared control channel (HS-SCCH) for HS-DSCH, and an uplink dedicated physical control channel (HS-DPCCH) for HS-DSCH. The UMTS communication system supports a compressed mode.

In order to support HSDPA, Adaptive Modulation and Coding (AMC) and HARQ have been proposed. The AMC and HARQ schemes applied to the HSDPA scheme will now be described in greater detail.

1. AMC Scheme

The AMC scheme refers to a data transmission scheme for adaptively determining a modulation scheme and a coding scheme according to a channel state between a Node B and a user equipment (UE), thereby improving the entire system efficiency of the Node B. Therefore, the AMC scheme comprises a plurality of modulation schemes and a plurality of coding schemes, and modulates/codes a data channel signal with a combination of the modulation schemes and the coding schemes. Commonly, each of the combinations of the modulation schemes and the coding schemes is referred to as a "Modulation and Coding Scheme (MCS)", and a plurality of MCSs with a level 1 to level n can be defined according to the number of the MCSs. That is, the AMC scheme adaptively determines a level of the MCS according to a channel state between a Node B and a UE currently connected to the Node B, thereby improving the entire system efficiency of the Node B.

2. HARQ Scheme (n-channel Stop And Wait HARQ (n-channel SAW HARQ))

The HARQ scheme introduces the following two planes in order to increase transmission efficiency of an Automatic Repeat request (ARQ) scheme. A first plane is provided to perform an exchange of the retransmission request and response between a UE and a Node B, and a second plane is provided to temporarily store defective data and then combine the stored defective data with its retransmitted data.

In addition, the HARQ scheme introduces the n-channel SAW HARQ scheme in order to make up for the defects of the conventional Stop And Wait ARQ (SAW ARQ) scheme. The SAW ARQ scheme cannot transmit the next packet data before an acknowledgement (ACK) for the previous packet data is received.

Therefore, in some cases, the SAW ARQ scheme should wait for an ACK even though it is now possible to transmit packet data. However, the n-channel SAW HARQ scheme continuously transmits a plurality of data packets even before the ACK for the previous packet data is received, thereby increasing channel efficiency.

That is, n logical channels are established between a UE and a Node B, and if each of the n logical channels can be identified by its unique time and channel number, the UE receiving packet data can determine a channel over which the received packet data is transmitted, and reorder data packets in a good order or soft-combine the corresponding packet data.

In HSDPA, a UE checks whether there is an error in data transmitted by a Node B, and transmits an ACK or a negative ACK (NACK) as the error check result over an HS-DPCCH for supporting HSDPA. Information indicating whether there is an error in transmitted data is denoted by ACK/NACK. Further, in order to support AMC, a UE can transmit channel quality information to a Node B. Downlink channel quality information is indicated by a channel quality indicator (CQI).

Next, a description will be made of an asynchronous compressed mode. The compressed mode refers to a scheme in which a UE is ordered to provide a timing gap for monitoring and measuring the other communication network in order to perform inter-frequency handover or inter-radio access technology handover.

A general process of performing handover by the UE will be described in greater detail below. The UE receives primary common pilot channel (P-CPICH) signals from available cells, and measures Received Signal Strength Indicators (RSSIs) of the received P-CPICH signals. The UE reports the measured RSSIs of the P-CPICH signals to a radio network controller (RNC). Then the RNC determines a handover state of the UE based on the RSSIs of the P-CPICH signals that are reported from the UE. That is, the RNC includes a step (1) of determining whether the UE should perform handover, and if the UE should perform handover, a step (2) of selecting a target cell to which the UE should perform handover from among the cells. Thus, in order to perform handover, the UE necessarily requires a process of measuring P-CPICH signals from its neighbor cells.

In the compressed mode, if a part of an HS-DPCCH transmitting the ACK/NACK or CQI information to a Node B overlaps with a slot corresponding to a transmission gap (TG) period of an uplink dedicated physical channel (DPCH), a UE cannot transmit ACK/NACK or CQI through its associated subframe of the HS-DPCCH.

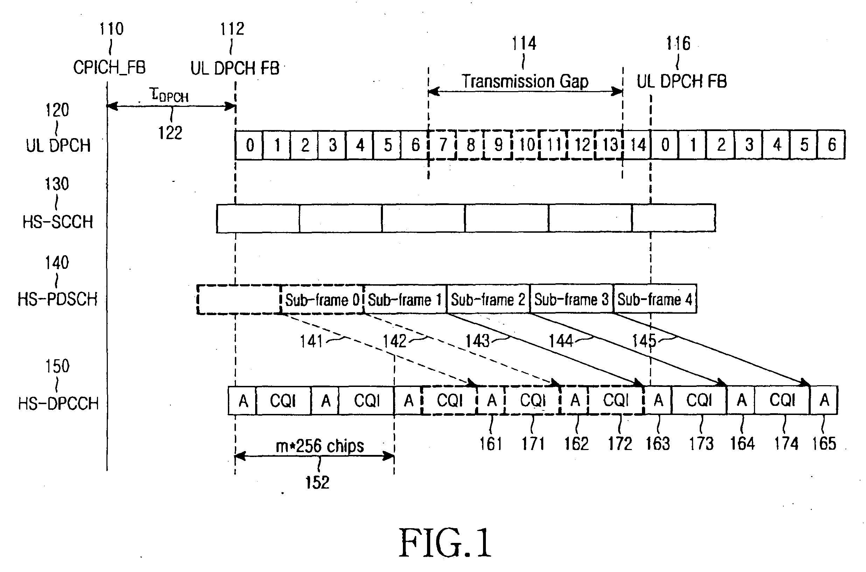

FIG. 1 is a diagram illustrating a conventional timing relationship between an uplink dedicated physical channel and a downlink channel when uplink control information cannot be transmitted due to a TG period in a compressed mode. Referring to FIG. 1, an uplink dedicated physical channel (UL-DPCH) 120 basically has a 10-ms frame structure. Each frame is comprised of 15 slots, and each slot has a 2560-chip length. Therefore, one frame has a 38400-chip length.

A high speed physical downlink shared channel (HS-PDSCH) is a channel over which a Node B (not shown) transmits HSDPA packet data to a UE (not shown). Therefore, the Node B allocates an orthogonal variable spreading factor (OVSF) code having a very low spreading factor (SF) to the HS-PDSCH over which high-speed packet data should be transmitted. For example, an SF=16 OVSF code can be allocated to the HS-PDSCH.

Control information for controlling the HS-PDSCH is transmitted over a high speed shared control channel (HS-SCCH). The HS-PDSCH control information transmitted over the HS-SCCH includes:

> (1) Transport Format and Resource related Information (TFRI), which represents an MCS level to be used in the HS-PDSCH, a channelization code for the HS-PDSCH, a size of a transport block set, and an identity (ID) of a transport channel;
> (2) HARQ Information, including;
>
>> (a) HARQ Process Number, wherein in n-channel SAW HARQ, the HARQ Process Number indicates a specific channel to which packet data belongs from among n logical channels for HARQ;
>> (b) Repetition Version, which is desired since a Node B transmits a selective part each time it transmits HSDPA packet data to a UE, accordingly, the UE should know the repetition version in order to determine which part of the HSDPA packet data was transmitted; and
>> (c) New Data Indicator, which indicates whether HSDPA packet data transmitted by a Node B to a UE is new packet data or retransmitted packet data.

As described above, the HS-SCCH can be roughly divided into the TFRI part and the HARQ information part. The TFRI information is information necessary for despreading the HS-PDSCH over which HSDPA packet data is transmitted. If the UE does not have the TFRI information, it cannot despread the HS-PDSCH. Therefore, the TFRI information is transmitted with a first part of the HS-SCCH and the HARQ information is transmitted with a last part of the HS-SCCH.

The HS-SCCH can be allocated one or more channelization codes. The maximum possible number of HS-SCCHs allocable to each UE is 4. Therefore, a Node B should inform a UE which of the 4 HS-SCCHs is allocated thereto. To this end, the Node B scrambles the TFRI information part, a first part of the HS-SCCH, using a UE ID. The UE ID is an ID allocated by the Node B to distinguish UEs. Then the UE can determine an HS-SCCH allocated thereto by descrambling TFRI information parts of received HS-SCCHs using the UE ID.

In HSDPA, a UE checks whether there is an error in data transmitted from a Node B, and transmits an ACK or a NACK as the error check result over the HS-DPCCH. Further, in order to support AMC, the UE can transmit channel quality report information to the Node B. The channel quality report information can be referred to as "channel quality indicator (CQI)". If a subframe, at which overlapping with a TG period begins in the HS-PDSCH, is an $n^{th}$ subframe, the UE cannot transmit ACKs corresponding to $(n-2)^{th}$ and $(n-1)^{th}$ subframes. That is, in a subframe period overlapping with a TG period of the UL-DPCH, the UE cannot transmit over the HS-PDSCH, ACKs 143 and 144 corresponding to packet data transmitted through an $0^{th}$ subframe and a $1^{st}$ subframe of the HS-PDSCH. That is, the UE cannot transmit ACK signals corresponding to the $0^{th}$ subframe and the $1^{st}$ subframe to the Node B at the two parts 161 and 162 of the HS-PDSCH. Because of its failure to receive the ACKs from the HS-PDSCH, the Node B retransmits the corresponding HS-PDSCH, causing a packet data transmission delay.

Accordingly, a need exists for a method that is capable of minimizing a transmission delay occurring due to a Node B's failure to receive an ACK in a compressed mode of a mobile communication system supporting the HSDPA scheme.

SUMMARY OF THE INVENTION

It is, therefore, an object of the present invention to provide a method for transmitting an ACK/NACK signal given an uplink compressed mode.

It is another object of the present invention to provide a method for preventing unnecessary retransmission of packet data by transmitting, for a recovery period, ACK/NACK information that failed to be transmitted through an uplink in a transmission gap (TG) period in an uplink compressed mode.

It is still another object of the present invention to provide a method for transmitting an ACK/NACK signal generated in a TG period but that failed to be transmitted, from a UE to a Node B after an end of the TG period in an uplink compressed mode.

It is still another object of the present invention to provide a method for preventing a transmission delay of an ACK/NACK for previously transmitted packet data when there is a TG period in an uplink due to handover.

It is still another object of the present invention to provide a method for adding ACK/NACK signals transmitted after a TG period to a CQI field of a next subframe after an end of the TG period before transmission in an uplink compressed mode, and a method for allowing a Node B to receive ACK/NACK signals scheduled to be received in a TG period, after the TG period.

It is still another object of the present invention to provide a method for reducing 10 repeated transmissions of ACK/NACK signals to 5 repeated transmissions in order to transmit a maximum of 5 ACK/NACK signals possibly generated in a TG period corresponding to one subframe of an uplink, and increasing transmission power to compensate for the reduction.

To achieve the above and other objects, a method is provided for preventing a transmission delay of data packets transmitted through an uplink due to a transmission gap (TG) period occurring when a user equipment (UE) performs handover from a Node B to its neighbor Node B in a mobile communication system. In the method, the Node B sequentially transmits data packets to the UE through a plurality of subframes, and the UE transmits response signals for the data packets transmission-delayed for the TG period to the Node B through a subframe of an uplink dedicated physical control channel (DPCCH), following the TG period.

BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a conventional timing relationship between an uplink dedicated physical channel and a downlink channel when uplink control information cannot be transmitted due to a TG period in a compressed mode;

FIG. 2 is a diagram illustrating a method for transmitting uplink control information using a first subframe after a TG period according to an embodiment of the present invention;

FIG. 3 is a diagram illustrating a method for transmitting a representative value of ACK/NACK information using an ACK/NACK field according to a first embodiment of the present invention;

FIG. 4 is a diagram illustrating a method for transmitting N delayed ACK/NACK signals using an ACK/NACK field according to a second embodiment of the present invention;

FIG. 5 is a diagram illustrating a method for transmitting ACK/NACK information using a CQI field at a fixed ratio according to a third embodiment of the present invention;

FIG. 6 is a diagram illustrating a method for transmitting ACK/NACK information using a CQI field according to a fourth embodiment of the present invention;

FIG. 7 is a diagram illustrating a method for transmitting ACK/NACK information using an ACK/NACK field and a CQI at a fixed ratio according to a fifth embodiment of the present invention; and

FIG. 8 is a diagram illustrating a method for transmitting ACK/NACK information using all of an ACK/NACK field and a CQI field according to a sixth embodiment of the present invention.

Throughout the drawings, like reference numerals will be understood to refer to like parts, components and structures.

DETAILED DESCRIPTION OF THE EXEMPLARY EMBODIMENTS

Several exemplary embodiments of the present invention will now be described in detail with reference to the annexed drawings. In the following description, a detailed description of functions and configurations well known to those skilled in the art which are incorporated herein have been omitted for conciseness.

The present invention provides a method for inserting ACK/NACK which failed to be transmitted for a transmission gap (TG) period of a compressed mode, into a non-TG period before transmission in order to prevent deterioration in the transmission of packet data.

That is, the present invention provides a method for defining neighboring subframes after a TG period as a recovery period and then transmitting ACK/NACK which failed to be transmitted for the TG period, for the recovery period to prevent unnecessary retransmission, thereby improving a rate of packet data. An exemplary operation performed in the recovery period will now be described in greater detail.

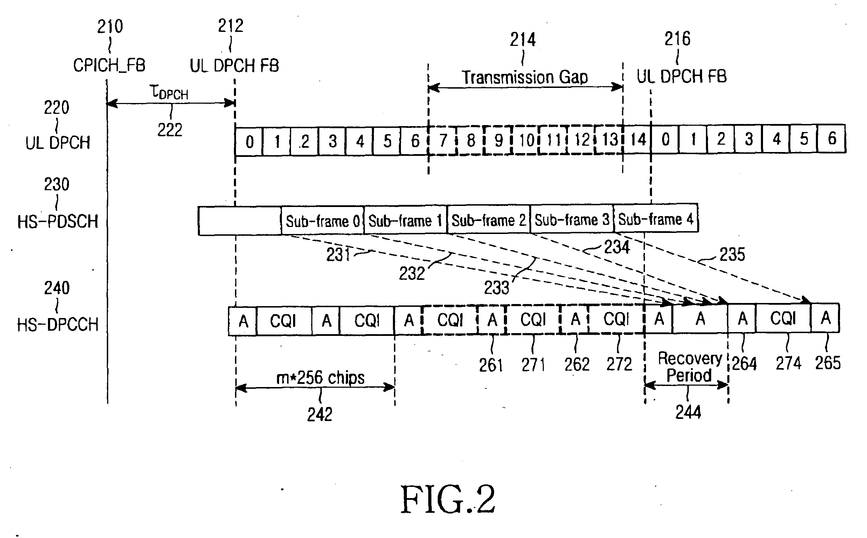

FIG. 2 is a diagram illustrating a method for transmitting control information using subframes located after a TG period according to an embodiment of the present invention. Referring to FIG. 2, a transmission time of ACK or NACK for an 0th subframe 231, a 1st subframe 232, and a 2nd subframe 233 of an HS-PDSCH 230 that is transmitted over an HS-DPCCH 240, overlaps with a TG period 214. Therefore, the present invention defines a subframe 244 that is first transmitted after an end of the TG period 214 as a recovery period 244, and transmits over the recovery period 244, ACK or NACK for the 0th subframe 231, the 1st subframe 232, and the 2nd subframe 233 of the HS-PDSCH 230.

Here, the recovery period 244 in the HS-DPCCH 240 refers to a first or predetermined period after the TG period 214 and is used for a special purpose that is different from that of the existing channel format.

The present invention transmits ACK or NACK

information for the 0th subframe 231, the 1st subframe 232, and the 2nd subframe 233 of the HS-PDSCH 230, which failed to be transmitted due to their overlapping with the TG period 214, over the recovery period 244.

Therefore, a Node B (not shown) receiving ACK/NACK information (or response information) for the subframe of the HS-PDSCH 230 that was previously transmitted for the TG period, can receive the ACK/NACK information for data packets 231, 232 and 233, within a minimized delay time. In this manner, it is possible to prevent unnecessary retransmission of the HS-PDSCH data packets 231, 232 and 233.

Here, for packet retransmission, the HS-DPCCH 240 transmits the ACK/NACK using a 2-ms subframe, and the subframe is comprised of 3 slots. Of the 3 slots, a first slot includes a field for transmitting ACK/NACK information indicating whether or not transmitted packet data is received, and second and third slots include fields for transmitting CQI information.

The present invention defines a particular subframe after the TG period as a recovery period, and transmits ACK/NACK that are transmission-delayed due to the TG period, over the recovery period. While the number of ACK/NACK signals that failed transmission in the TG period is a maximum ofN, the subframe includes 1 slot for one ACK/NACK signal and 2 slots for the CQI.

Therefore, the present invention comprises a method for transmitting ACK/NACK information for more packets at a time using a less-than-10-bit iterative coding technique, instead of a basic 10-bit iterative coding technique, in order to transmit several ACK/NACK signals after the TG period. The present invention further comprises a method for transmitting an ACK/NACK representative value, and a method using a CQI field for transmitting the ACK/NACK information. Here, a decrease in reliability due to the reduction in coding rate can be compensated by increasing transmission power.

In accordance with the above description, the following exemplary embodiments of the present invention are now described in greater detail.

First Embodiment

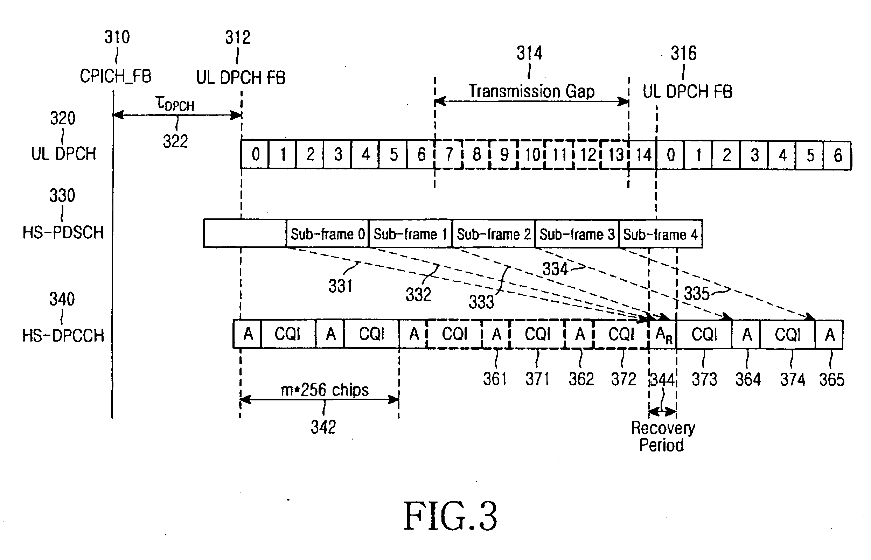

FIG. 3 is a diagram illustrating a method for transmitting a representative value of ACK/NACK information according to a first embodiment of the present invention. Referring to FIG. 3, a UE (not shown) receiving packet data over an HS-PDSCH 330 from a Node B (not shown), transmits ACK/NACK information for the received packet data. At this point, the UE supporting a compressed mode fails to transmit ACK/NACK at the corresponding time for a TG period 314.

In this case, the UE transmits the ACK/NACK that failed transmission for the TG period 314, through an available subframe 344 after the TG period 314. That is, the UE uses the subframe 344 after the TG period 314 as a recovery period 344 for the ACK/NACK that failed transmission for the TG period 314.

An ACK/NACK value transmitted for the recovery period 344 is denoted by $A_R$ representing ACK/NACK signals 331, 332 and 333 for an 0th subframe, a 1st subframe, and a 2nd subframe. The representative value $A_R$ can be determined by the UE.

For example, assuming that the representative value $A_R$ represents a total of N ACK/NACK signals, if the N ACK/NACK signals are all ACK signals, the representative value $A_R$ is set to ACK before being transmitted. However, if the NACK signals are larger in number than the ACK signals, the representative value $A_R$ is set to NACK before being transmitted.

That is, in order to increase retransmission efficiency, the ACK/NACK representative value is set to ACK or NACK before being transmitted even though not all of the ACK/NACK signals are identical to each other.

The representative value $A_R$ can be set using the following Equations (1) and (2),

$$A_R = ACK \qquad (1)$$

wherein the number of ACKs is greater than T, otherwise,

$$A_R = NACK \qquad (2)$$

That is, the representative value $A_R$ is set by analyzing ACK/NACK information for the TG period. Here, T denotes a threshold, and is greater than 0. The threshold T can be determined according to a ratio of ACKs to NACKs.

As described above, the present invention transmits a representative value of the ACK/NACK signals that failed transmission for the TG period using an ACK/NACK field of a first slot without modifying a format of the existing HS-DPCCH subframe. In this way, it is possible to prevent unnecessary retransmission of an HS-PDSCH not transmitted during a TG period of the existing system or of an already received error-free HS-PDSCH packet.

Second Embodiment

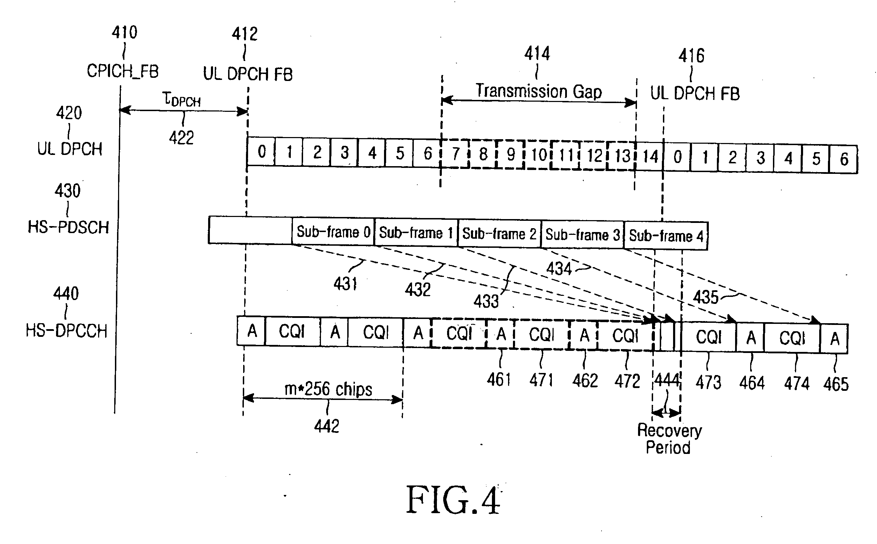

FIG. 4 is a diagram illustrating a method for transmitting N ACK/NACK signals through an ACK/NACK field according to a second embodiment of the present invention. Referring to FIG. 4, a second embodiment of the present invention sequentially allocates ACK/NACK signals 431, 432 and 433 for an 0th subframe, a 1st subframe and a 2nd subframe to an ACK/NACK field of a recovery period 444 before transmission. That is, a second embodiment of the present invention defines an ACK/NACK field 444 of an HS-DPCCH 440, corresponding to the 2nd subframe, as

the recovery period 444. After the definition, a UE (not shown) performs (N, 1) iterative coding lower than (10, 1) iterative coding on the ACK/NACK field 444 of the HS-DPCCH 440, and sequentially transmits the multiple ACK/NACK signals. Here, N is an integer greater than 1.

The UE can increase transmission power in order to compensate for deterioration in coding performance possibly caused by the reduction in coding rate of the ACK/NACK field 444. Here, control of the transmission power for the recovery period 444 may be further dependent on a channel condition.

Third Embodiment

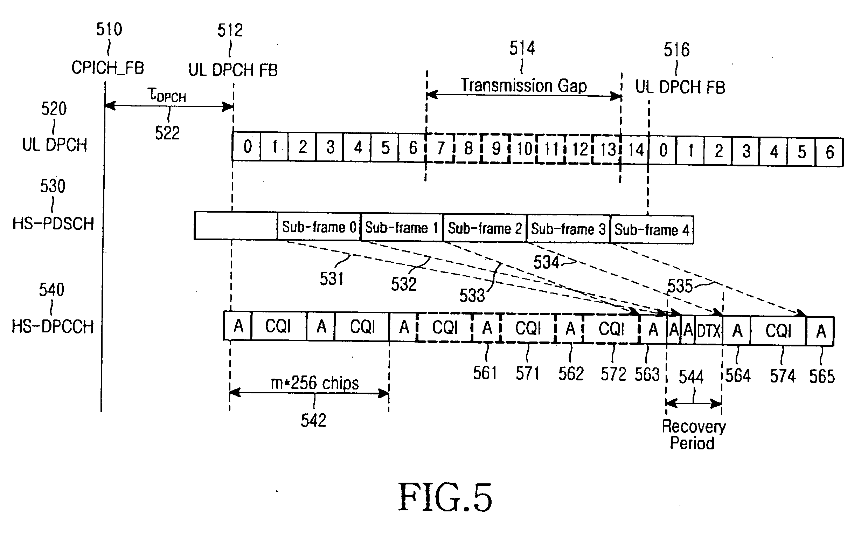

FIG. 5 is a diagram illustrating a method for transmitting transmission-delayed ACK/NACK information using a CQI field according to a third embodiment of the present invention. Referring to FIG. 5, a third embodiment of the present invention transmits ACK/NACK for a 2nd subframe of an HS-PDSCH 530 through an ACK/NACK field using the existing coding scheme, and transmits ACK/NACK signals 531 and 532 for an 0th subframe and a 1st subframe of the HS-PDSCH 530 that failed transmission for a TG period 514 through a CQI field using a coding scheme having a higher or lower coding rate than that of the existing coding scheme. That is, a UE (not shown) transmits the ACK/NACK signals 531 and 532 for the 0th subframe and the 1st subframe through a CQI field 544 of a first HS-DPCCH subframe after an end of the TG period 514. The UE transmits ACK/NACK information 563 for the 2nd subframe 533 of the HS-PDSCH 530 through an ACK/NACK field 563 which is its original response period, using a (10, 1) iterative coding scheme, and transmits ACK/NACK signals 531 and 532 for the 0th subframe and the 1st subframe using a coding scheme having a lower coding rate than that of (10, 1) iterative coding scheme. A remaining part of the CQI field is subject to discontinuous transmission (DTX). However, if the number of ACK/NACK signals to be transmitted through the CQI field is less than 2, the UE can use a coding scheme having a coding rate higher than that of the (10, 1) iterative coding scheme. That is, the coding scheme should be selected according to the number of the ACK/NACK signals.

Fourth Embodiment

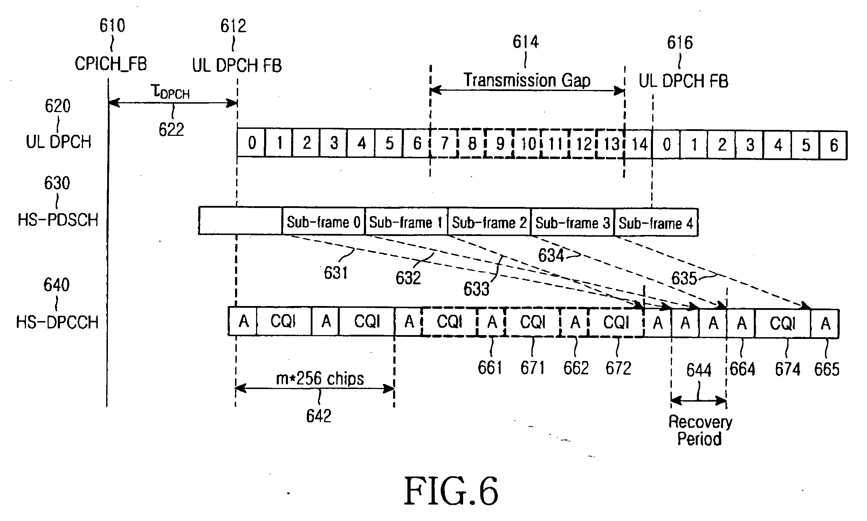

FIG. 6 is a diagram illustrating a method for transmitting ACK/NACK information at a fixed ratio of a CQI field according to a fourth embodiment of the present invention. It is assumed in FIG. 6 that the fixed ratio corresponds to the entire CQI field.

Referring to FIG. 6, if the number of ACK/NACK signals to be transmitted through a CQI field is 2, a UE (not shown) transmits an ACK/NACK signal for a 2nd subframe of an HS-PDSCH 630 through an ACK/NACK field using the existing coding scheme, and transmits ACK/NACK signals 631 and 632 for an 0th sub-

frame and a 1st subframe of the HS-PDSCH 630 that failed transmission for a TG period 614 through a CQI field using the existing coding scheme. Here, the coding scheme should be selected according to the fixed ratio of the CQI field and the number of ACK/NACK signals.

Fifth Embodiment

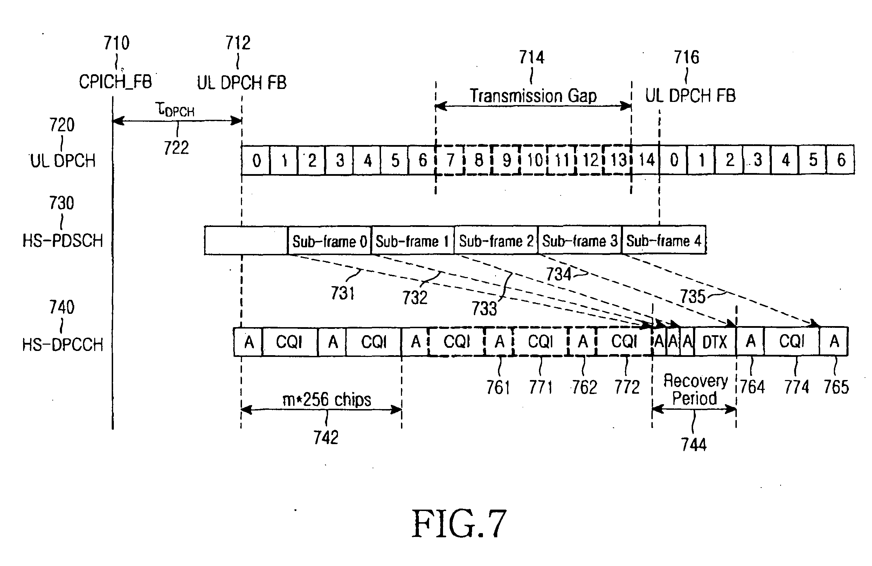

FIG. 7 is a diagram illustrating a method for transmitting transmission-delayed ACK/NACK information using an ACK/NACK field and a CQI according to a fifth embodiment of the present invention. Referring to FIG. 7, a UE (not shown) defines the entire subframe following a TG period 714 as a recovery period 744, and transmits transmission-delayed ACK/NACK signals for the recovery period 744, maintaining the existing coding rate. That is, the UE transmits the ACK/NACK signals to be transmitted for the recovery period 744 without separating them into an ACK/NACK field and a CQI field.

For the recovery period 744, the UE first transmits ACK/NACK signals 731 and 732 that failed transmission for the TG period 714, and then transmits an ACK/NACK signal 733 to be transmitted for the recovery period 744. Here, the UE defines the entire subframe of an HS-DPCCH 740 as the recovery period 744, and transmits the ACK/NACK signals that failed transmission for the TG period 714 for the recovery period 744. That is, the UE codes the ACK/NACK information by a fixed number of bits, transmits the coded ACK/NACK information through predetermined fields 731, 732 and 733, and performs DTX processing on the remaining part. If the number of ACK/NACK signals to be transmitted for the recovery period 744 is less than 3, a coding scheme for the ACK/NACK signals should be set higher in coding rate than the existing coding scheme. If the number of ACK/NACK signals to be transmitted for the recovery period 744 is larger than 3, a coding scheme for the ACK/NACK signals should be set lower in coding rate than the existing coding scheme. However, if the number of ACK/NACK signals to be transmitted through the CIQ field is 2, the existing coding scheme can be used. That is, the coding scheme should be selected according to the number of the ACK/NACK signals.

Sixth Embodiment

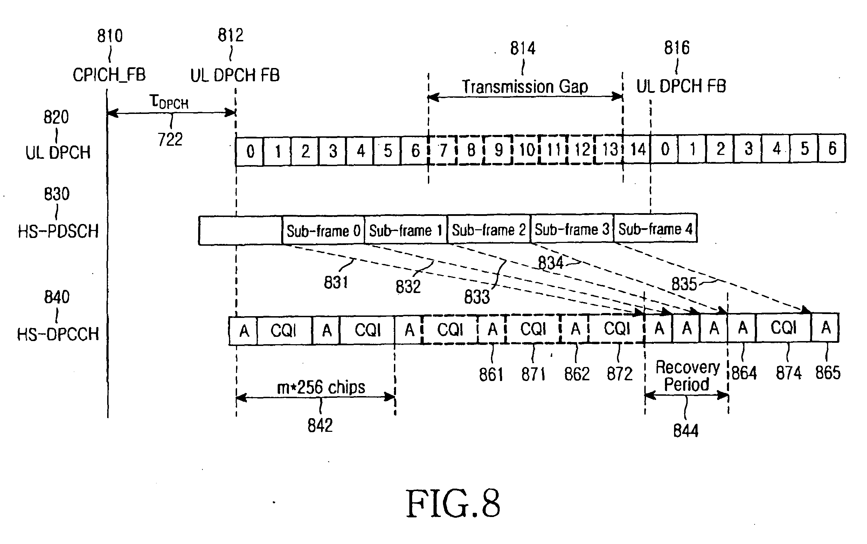

FIG. 8 is a diagram illustrating a method for transmitting ACK/NACK information at a fixed ratio of an ACK/NACK field and a CQI field according to a sixth embodiment of the present invention. Referring to FIG. 8, as described in connection with FIG. 7, a UE (not shown) appropriately codes an entire subframe 844 which is a recovery period according to the number of ACK/NACK signals 831, 832 and 833, before transmission. When the existing coding rate is maintained, the recovery period 844 can have either one subframe or several subframes.

Here, the recovery period 844 can be set in proportion to a length of a TG period 814, or some ACK/NACK signals for the TG period 814 can be subjected to DTX thereby adjusting a length of the recovery period 844. For example, if a length of the TG period is set such that 4 ACK/NACK signals should be compensated, the recovery period can be defined over 2 subframes.

As described above, in an HSDPA communication system in which a compressed mode is performed, the present invention transmits ACK/NACK signals that failed transmission for a TG period of an uplink channel through a subframe located after the TG period and without a separate channel. In addition, the present invention minimizes a data transmission delay caused by retransmission by transmitting the ACK/NACK signals through a subframe after the TG period, thereby improving the entire performance of the mobile communication system.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for preventing a transmission delay of data packets transmitted through an uplink due to a transmission gap (TG) period occurring when a user equipment (UE) performs handover from a Node B to its neighbor Node B in a mobile communication system, the method comprising the steps of:

   sequentially transmitting data packets through a plurality of subframes; and
   transmitting response signals for the data packets that were transmission-delayed for the TG period through a subframe of an uplink dedicated physical control channel (DPCCH) following the TG period.

2. The method of claim 1, further comprising the step of:

   transmitting the response signals for the transmission-delayed data packets through an acknowledgement/negative acknowledgement (ACK/NACK) field in the subframe of the uplink DPCCH following the TG period.

3. The method of claim 1, further comprising the step of:

   transmitting a response signal representing the response signals for the transmission-delayed data packets through an ACK/NACK field in the subframe of the uplink DPCCH following the TG period.

4. The method of claim 1, further comprising the step of:

   sequentially iterative-coding the response signals for the transmission-delayed data packets and transmitting the coded response signals through an ACK/NACK field in the subframe of the uplink DPCCH following the TG period.

5. The method of claim 1, further comprising the step of:

   transmitting the response signals for the transmission-delayed data packets through a channel quality indicator (CQI) field in the subframe of the uplink DPCCH following the TG period.

6. The method of claim 1, further comprising the step of:

   iterative-coding the response signals for the transmission-delayed data packets and transmitting the coded response signals through a CQI field in the subframe of the uplink DPCCH following the TG period on a discontinuous transmission (DTX) basis.

7. The method of claim 1, further comprising the step of:

   sequentially transmitting the response signals for the transmission-delayed data packets through the entire subframe of the uplink DPCCH following the TG period.

8. The method of claim 1, further comprising the step of:

   iterative-coding the response signals for the transmission-delayed data packets and transmitting the coded response signals through the subframe of the uplink DPCCH following the TG period on a DTX basis.

9. A method for transmitting data in a mobile communication system, the method comprising the steps of:

   receiving at a second transceiver a data packet from a first transceiver;
   generating acknowledgement/negative acknowledgement (ACK/NACK) information according to whether there is an error in the received data packet; and
   transmitting ACK/NACK information that is transmission-delayed for a transmission gap (TG) period to the first transceiver along with the generated ACK/NACK information.

10. The method of claim 9, further comprising the step of:

transmitting from the first transceiver the transmission-delayed ACK/NACK information through a transmission frame following the TG period.

11. The method of claim 9, wherein the second transceiver transmits a value representing the transmission-delayed ACK/NACK information.

12. A transceiver for transmitting data in a mobile communication system, comprising:

a transceiver component for sending and receiving a data packet;
a transceiver component for generating acknowledgement/negative acknowledgement (ACK/NACK) information according to whether there is an error in a received data packet; and
a transceiver component for transmitting ACK/ NACK information that is transmission-delayed for a transmission gap (TG) period along with the generated ACK/NACK information.

13. The transceiver of claim 12, further comprising:

a transceiver component for transmitting the transmission-delayed ACK/NACK information through a transmission frame following the TG period.

14. The transceiver of claim 12, wherein the transceiver further transmits a value representing the transmission-delayed ACK/NACK information.

FIG.1

FIG.2

FIG.3

FIG.4

FIG.5

EP 1 565 023 A2

610 612 614 616

CPICH_FB UL DPCH FB Transmission Gap UL DPCH FB

620 $T_{DPCH}$

UL DPCH 622

| 0 | 1 | 2 | 3 | 4 | 5 | 6 | 7 | 8 | 9 | 10 | 11 | 12 | 13 | 14 | 0 | 1 | 2 | 3 | 4 | 5 | 6 |

630

HS-PDSCH

| Sub-frame 0 | Sub-frame 1 | Sub-frame 2 | Sub-frame 3 | Sub-frame 4 |

634

631 632 633 635

640

HS-DPCCH

| A | CQI | A | CQI | A | CQI | A | CQI | A | CQI | A | A | A | A | CQI | A |

661 671 662 672 644 664 674 665

m*256 chips

642

Recovery Period

FIG.6

FIG.7

EP 1 565 023 A2

FIG.8